# EUROPEAN PATENT APPLICATION

(11) **EP 4 769 729 A1**
(43) Date of publication of application: **01.07.2026**
(21) Application number: 25867144.5
(22) Date of filing: 02.09.2025
(51) Int. Cl.: H01M 50/244, H01M 10/04

(54) **LIFTING JIG AND METHOD FOR LIFTING BATTERY CELL ASSEMBLY USING SAME**

(30) Priority: 25.09.2024 KR 20240129556
(71) Applicant: LG Energy Solution, Ltd., Seoul 07335 (KR)
(72) Inventor: HAN, Nyeon Gu, Daejeon 34122 (KR); KIM, Ki Young, Daejeon 34122 (KR); KIM, Young Man, Daejeon 34122 (KR); JANG, Jun Ho, Daejeon 34122 (KR)
(74) Representative: Plasseraud IP
(86) International application number: PCT/KR2025/013486
(87) International publication number: WO 2026/071532

(57) **Abstract**

According to exemplary embodiments, a lifting jig is provided. The lifting jig includes a plate and a plurality of fixing pads coupled to the plate. The plate includes holes for coupling to side beams of a battery cell assembly. The battery cell assembly includes the side beams and a plurality of battery cells interposed between the side beams.

## Description

### [Technical Field]

The present disclosure relates to a lifting jig and a method for lifting a battery cell assembly using the same. This application claims the benefit of Korean Patent Application No. 10-2024-0129556, filed on September 25, 2024, the disclosure of which is incorporated herein by reference.

### [Background]

Unlike primary batteries, secondary batteries can be charged and discharged a plurality of times. Secondary batteries are widely used as energy sources for various wireless devices such as handsets, laptops, and cordless vacuum cleaners. Recently, due to improvements in energy density and economies of scale, the manufacturing cost per unit capacity of secondary batteries has decreased dramatically. As the cruising range of battery electric vehicles (BEVs) has increased to levels comparable to fuel vehicles, the primary application of secondary batteries is shifting from mobile devices to mobility.

The trend in secondary battery technology development for mobility is focused on improving energy density and safety. Here, the energy density of a secondary battery is the maximum electrical energy it can store divided by its mass. High energy density directly impacts a vehicle driving efficiency and range, driving extensive research into enhancing secondary battery energy density.

One powerful solution for increasing the energy density of secondary batteries is the module-less type battery pack (or cell-to-pack structure). In a module-less type battery pack, the module covering the battery cells is omitted, thereby dramatically reducing the mass of the battery pack.

### [Summary]

### [Technical Problem]

The technical problem to be solved by the technical idea of the present disclosure is to provide a lifting jig with improved reliability and a method for lifting a battery cell assembly using the same.

### [Technical Solution]

According to exemplary embodiments of the present disclosure for solving the above-described problem, a lifting jig is provided. The lifting jig includes a plate and a plurality of fixing pads coupled to the plate. The plate includes holes for coupling to side beams of a battery cell assembly. The battery cell assembly includes the side beams and a plurality of battery cells interposed between the side beams.

At least two or more of the plurality of fixing pads are configured to apply different pressures to the battery cell assembly.

A pressure applied to the battery cell assembly by the plurality of fixing pads increases toward a center of the plurality of fixing pads based on a direction in which the plurality of fixing pads is stacked.

The lifting jig further includes a pressure control part connected to each of the plurality of fixing pads and configured to control a pressure applied to the battery cell assembly by each of the plurality of fixing pads.

The side beams include holes. The lifting jig further includes bolts passing through the holes of the plate and holes of the side beams.

The plate includes a first plate coupled to the plurality of fixing pads, and a second plate spaced apart from the first plate and bolted to the side beams. The lifting jig further includes a rod connecting the first plate and the second plate, and a driving part for adjusting a distance between the first plate and the second plate by controlling a length of the rod.

The plurality of fixing pads includes first fixing pads arranged to overlap each other in a first direction, and second fixing pads arranged to overlap each other in the first direction. Each of the first fixing pads is spaced apart from each of the second fixing pads in a second direction different from the first direction.

Each of the battery cells overlaps in a vertical direction with a corresponding one of the first fixing pads and a corresponding one of the second fixing pads.

Each of the plurality of fixing pads is arranged to overlap in a horizontal direction and overlaps in a vertical direction with two or more of the plurality of battery cells.

A length of each of the fixing pads is equal to or less than a length of each of the battery cells.

A width of each of the fixing pads is equal to or greater than a width of each of the battery cells.

According to exemplary embodiments, a battery cell assembly lifting method is provided. The method includes applying different vacuum pressures in a vertical direction to a plurality of battery cells of a battery cell assembly.

The method further includes applying a compressive force to the battery cell assembly based on a stacking direction of the plurality of battery cells.

The method further includes separating the battery cell assembly from a base of a battery pack housing.

According to exemplary embodiments, a battery cell assembly lifting method is provided. The method includes: fixing a plurality of battery cells of a battery cell assembly to a plurality of fixing pads of a lifting jig; and bolting side beams of the battery cell assembly to the lifting jig.

### [Advantageous Effects]

According to exemplary embodiments of the present disclosure, a battery cell assembly can be stably fixed to a lifting jig using fixing pads. Accordingly, when lifting the battery cell assembly, misalignment of the battery cell assembly, sagging of the lower end part, and cracking can be prevented.

The effects that can be obtained from the exemplary embodiments of the present disclosure are not limited to the effects mentioned above, and other effects not mentioned can be clearly derived and understood by one having ordinary knowledge in the technical field to which the exemplary embodiments of the present disclosure belong from the following description. In other words, unintended effects of practicing the exemplary embodiments of the present disclosure can also be derived from the exemplary embodiments of the present disclosure by one having ordinary knowledge in the technical field.

### [Brief Description of the Drawings]

FIG. 1 is a top view showing a lifting jig according to exemplary embodiments.
FIG. 2 is a bottom view showing a lifting jig according to exemplary embodiments.
FIGS. 3 and 4 are cross-sectional views showing a lifting jig according to exemplary embodiments.
FIGS. 5 and 6 are perspective views showing a lifting jig according to exemplary embodiments.
FIG. 7 is a cross-sectional view showing a lifting jig according to exemplary embodiments.
FIG. 8 is a perspective view showing a lifting jig according to exemplary embodiments.
FIG. 9 is a flowchart for explaining a method for lifting a battery cell assembly according to exemplary embodiments.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment)

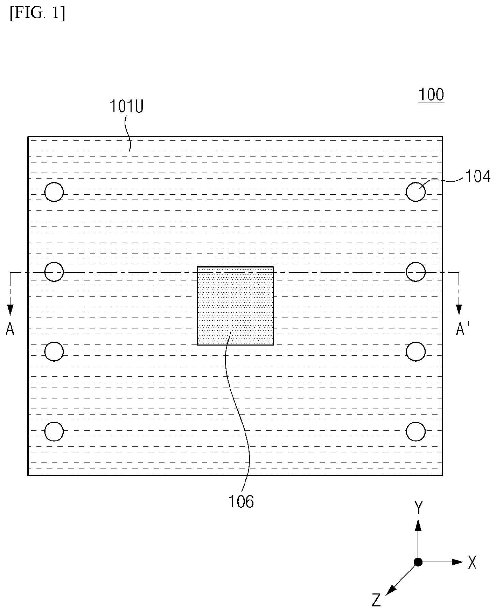

FIG. 1 is a top view showing a lifting jig 100 according to exemplary embodiments.

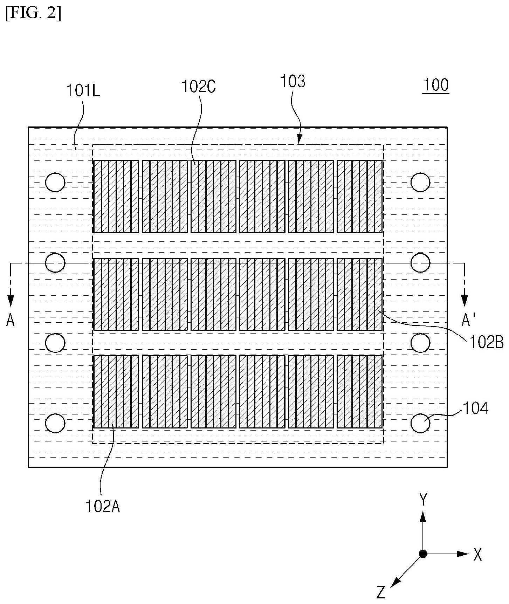

FIG. 2 is a bottom view showing the lifting jig 100 according to exemplary embodiments.

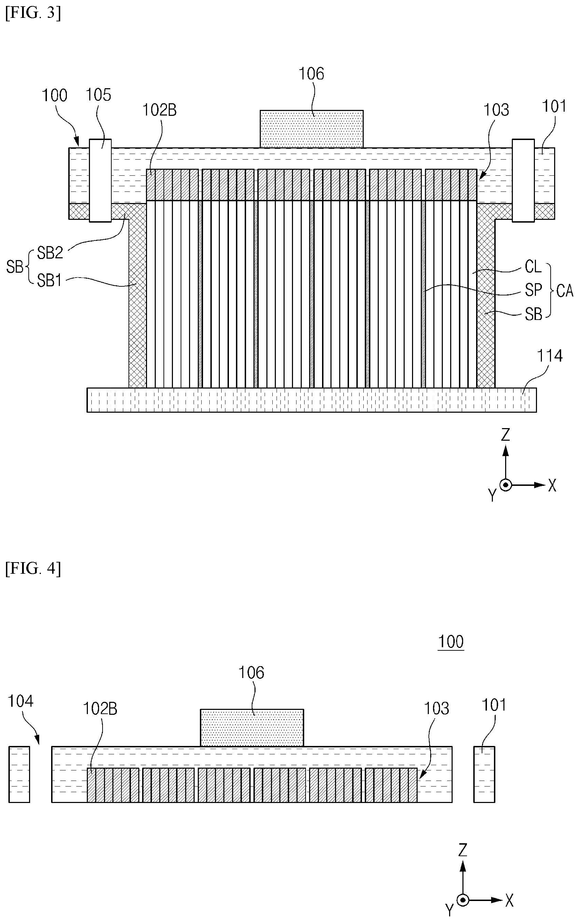

FIGS. 3 and 4 are cross-sectional views showing the lifting jig 100 according to exemplary embodiments. FIG. 3 shows an embodiment in which a battery cell assembly CA is fixed to the lifting jig 100. FIG. 4 shows only the lifting jig 100. FIGS. 3 and 4 are cross-sectional views of the lifting jig 100 taken along line A-A' of FIGS. 1 and 2.

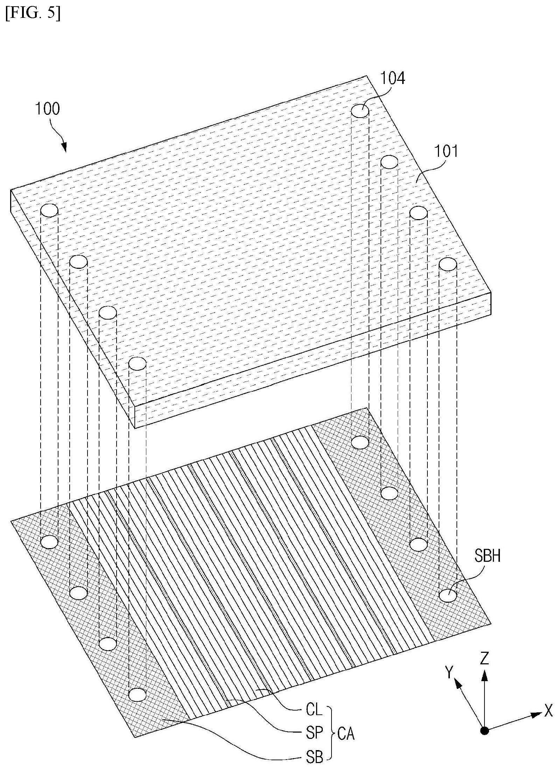

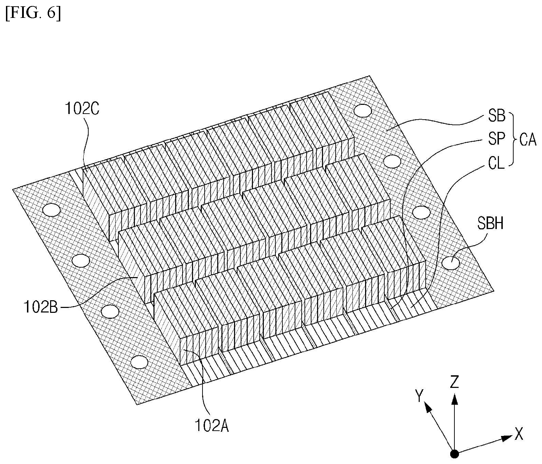

FIG. 5 is a perspective view showing the lifting jig 100 according to exemplary embodiments. FIG. 5 shows the positional relationship between the lifting jig 100 and the battery cell assembly CA. FIG. 6 shows an embodiment in which the battery cell assembly CA is fixed to the fixing pads 102A, 102B, 102C of the lifting jig. In FIG. 6, the plate of the lifting jig is excluded and only the fixing pads 102A, 102B, 102C are shown.

Referring to FIGS. 1 to 6, the lifting jig 100 may include a plate 101, fixing pads 102A, 102B, 102C, bolts 105, and a pressure control part 106.

The lifting jig 100 may be configured to fix the battery cell assembly CA for lifting the battery cell assembly CA. The lifting jig 100 lifts the battery cell assembly CA coupled to the lifting jig 100, moves it, and puts it down again, so that the battery cell assembly CA can be transferred. According to exemplary embodiments, when a defect occurs in one battery cell assembly CA among a plurality of battery cell assemblies, only the battery cell assembly CA can be lifted and selectively removed from the battery pack housing.

The battery cell assembly CA may include battery cells CL, separators SP, and side beams SB. According to exemplary embodiments, the battery cell assembly CA may not include a module frame. The plurality of battery cells CL and the plurality of separators SP may form a cell stack. According to exemplary embodiments, each of the plurality of battery cells CL may be bidirectional cells. That is, the positive terminals of the plurality of battery cells CL may be disposed at each end, and the negative terminals of the plurality of battery cells CL may be disposed at each other end. A person skilled in the art can easily arrive at an embodiment in which each of the plurality of battery cells CL is a unidirectional cell based on what is described herein.

Each of the plurality of battery cells CL includes an electrode assembly, an electrolyte, and a case covering them. The case may be any one of a pouch case, a cylindrical case, and a prismatic case. The pouch case may include an aluminum laminate sheet. The prismatic case and the cylindrical case may include a metal material such as aluminum. The prismatic case may have a rectangular parallelepiped shape. The cylindrical case may have a cylindrical shape.

The electrode assembly embedded in the case includes a positive electrode, a negative electrode, and a separator interposed between the positive electrode and the negative electrode. The electrode assembly may be any one of a jelly-roll type and a stack-type depending on the assembly type. A jelly-roll type electrode assembly may include a winding structure of a positive electrode, a negative electrode, and a separator interposed therebetween. A stack-type electrode assembly includes a plurality of positive electrodes, a plurality of negative electrodes sequentially stacked, and a plurality of separators interposed therebetween. According to exemplary embodiments, a plurality of battery cells CL connected in parallel may constitute a plurality of banks, and the plurality of banks may be connected in series. The output current of the battery cell assembly CA may be determined according to the number of battery cells CL included in each of the plurality of banks. The output voltage of the battery cell assembly CA may be determined according to the number of the plurality of banks connected in series with each other.

The plurality of separators SP may be interposed between the plurality of battery cells CL. The plurality of separators SP may include a compressible material. The plurality of separators SP may absorb swelling of the plurality of battery cells CL.

According to exemplary embodiments, the plurality of separators SP may be thermal barriers. According to exemplary embodiments, each of the plurality of separators SP may have a high melting temperature and low thermal conductivity. According to exemplary embodiments, each of the plurality of separators SP may include a flame retardant material such as ceramic and coated glass material. According to exemplary embodiments, the plurality of separators SP may be configured to release fire retarding material and fire extinguishing agent when a thermal runaway event occurs.

The side beams SB may be spaced apart from each other with the battery cells CL and separators SP interposed therebetween. The side beams SB may cover the battery cells CL. Each of the side beams SB may have a symmetrical shape with respect to the battery cells CL. The side beams SB may be fixed to the cell stack by an adhesive material or the like.

Each of the side beams SB may include a first portion SB1 extending along the Z direction and a second portion SB2 extending along the X direction. The first portion SB1 may be fixed to the cell stack. The second portion SB2 may be parallel to the plate 101 of the lifting jig 100. The second portion SB2 may be coupled to the plate 101 of the lifting jig 100 by a method such as bolting.

The second portion SB2 may include a plurality of holes SBH. The plurality of holes SBH of the second portion SB2 may be arranged along the Y direction. According to exemplary embodiments, the plurality of holes SBH of the second portion SB2 may be arranged along the longitudinal direction of the side beams SB. The number of the plurality of holes SBH of the second portion SB2 may vary depending on the length of the side beams SB, the number of battery cells CL, the weight of the battery cells CL, and the like. According to exemplary embodiments, each of the side beams SB may include 4 to 12 holes SBH.

The battery cell assembly CA may be mounted in the battery pack housing. The battery cell assembly CA may be fixed to the base 114 of the battery pack housing by an adhesive material such as resin. The lifting jig 100 may be configured to fix the battery cell assembly CA. By lifting the lifting jig 100 fixing the battery cell assembly CA, the battery cell assembly CA can be separated from the base 114 of the battery pack housing. The lifting jig 100 may cover all or part of the battery cell assembly CA.

The plate 101 may include a plurality of holes 104. According to exemplary embodiments, the plurality of holes 104 may be arranged in one direction along the edge of the plate 101. The plurality of holes 104 of the plate 101 may be aligned with the plurality of holes SBH of the side beams SB of the battery cell assembly CA. The number of the plurality of holes 104 of the plate 101 may be equal to the number of the plurality of holes SBH of the side beams SB of the battery cell assembly CA. The plate 101 may be bolted to the side beams SB. The lifting jig 100 may further include bolts passing through the holes 104 of the plate 101 and the holes SHB of the side beams SB.

The plate 101 may include a first surface 101L and a second surface 101U opposite to the first surface 101L. The plate 101 may include an accommodating part 103 recessed from the first surface 101L of the plate. The accommodating part 103 may accommodate the fixing pads 102A, 102B, 102C. The fixing pads 102A, 102B, 102C may be coupled to the plate 101 in the accommodating part 103. The fixing pads 102A, 102B, 102C may be coupled to the plate 101 by an adhesive material, bolting, or the like. On the second surface 101U, a pressure control part 106 for controlling the pressure applied to the battery cell assembly CA by the fixing pads 102A, 102B, 102C may be disposed.

When the lifting jig 100 is loaded on the battery cell assembly CA, the fixing pads 102A, 102B, 102C may apply pressure to the battery cell assembly CA. According to exemplary embodiments, the fixing pads 102A, 102B, 102C may apply a vacuum pressure lower than atmospheric pressure to each battery cell CL. The battery cells CL may be adsorbed to the fixing pads 102A, 102B, 102C and fixed to the lifting jig 100.

The fixing pads 102A may be arranged in the X direction. The fixing pads 102A may overlap each other in the X direction. The fixing pads 102B may be arranged in the X direction. The fixing pads 102B may overlap each other in the X direction. The fixing pads 102C may be arranged in the X direction. The fixing pads 102C may overlap each other in the X direction.

Each of the fixing pads 102A may be spaced apart from each of the fixing pads 102B in the Y direction. Each of the fixing pads 102B may be spaced apart from each of the fixing pads 102C in the Y direction. The fixing pads 102B may be interposed between the fixing pads 100A and the fixing pads 102C.

The width in the X direction of each of the fixing pads 102A, 102B, 102C may be substantially equal to the width in the X direction of each of the battery cells CL. The length in the Y direction of each of the fixing pads 102A, 102B, 102C may be different from the length in the Y direction of each of the battery cells CL. The length in the Y direction of each of the fixing pads 102A, 102B, 102C may be smaller than the length in the Y direction of each of the battery cells CL.

When the lifting jig 100 is loaded on the battery cell assembly CA, each of the battery cells CL may overlap in the Z direction with a corresponding one of the fixing pads 102A, a corresponding one of the fixing pads 102B, and a corresponding one of the fixing pads 102C.

During the process of lifting the battery cell assembly CA, forces of different magnitudes may be applied to each battery cell CL. For example, the battery cell assembly CA is fixed to the base 114 of the battery pack housing by an adhesive material, and the adhesive strength between the adhesive material and each battery cell CL may be different. When lifting the battery cell assembly CA, the difference in adhesive strength applied to the battery cells CL may cause misalignment of the battery cell assembly CA, sagging of the lower end part of the battery cell assembly CA, cracking, and the like.

To prevent this problem, at least some of the fixing pads 102A, 102B, 102C may apply different pressures to the battery cell assembly CA. According to exemplary embodiments, the fixing pads 102A may apply greater pressure to the battery cell assembly CA toward the center of the fixing pads 102A based on the X direction. The fixing pads 102B may apply greater pressure to the battery cell assembly CA toward the center of the fixing pads 102B based on the X direction. The fixing pads 102C may apply greater pressure to the battery cell assembly CA toward the center of the fixing pads 102C based on the X direction. As a result, even when there is a difference in the adhesive strength between each battery cell CL included in the battery cell assembly CA and the base 114, the battery cell assembly CA can be stably lifted without deformation such as sagging of the lower end part, cracking, and the like.

The lifting jig 100 may further include a pressure control part 106. The pressure control part 106 may be configured to individually control the vacuum pressure of each of the fixing pads 102A, 102B, 102C. The pressure control part may include a vacuum pump, vacuum pipes connecting the vacuum pump and each of the fixing pads 102A, 102B, 102C, and valves coupled to each of the vacuum pipes.

### (Second embodiment)

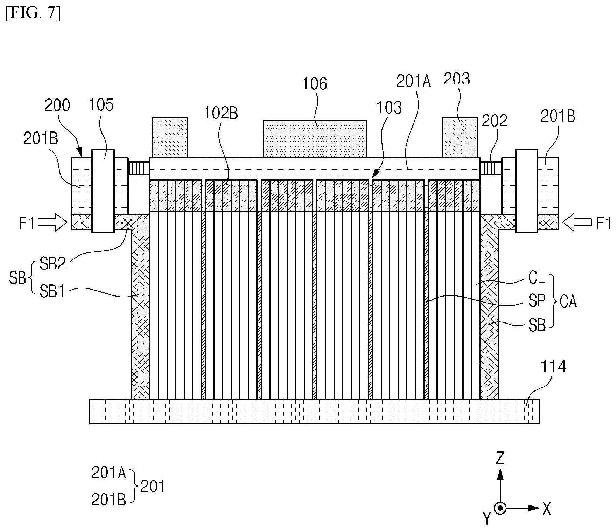

FIG. 7 is a cross-sectional view showing a lifting jig 200 according to exemplary embodiments. In FIG. 7, the same reference numerals as those in FIGS. 1 to 6 can be applied to the description above in the first embodiment, and the same description will be omitted. Hereinafter, the configuration of the second embodiment, which is different from the first embodiment, will be mainly described.

In FIG. 7, the plate 201 of the lifting jig 200 may include a first plate 201A and a second plate 202B. The first plate 201A may be coupled to the fixing pads 102B. The second plate 202B may be spaced apart from the first plate 201A. The second plate 202B may be bolted to the side beams SB of the battery cell assembly CA by bolts 105.

The lifting jig 200 may further include a compression part including a rod 202 and a driving part 203. The rod 202 may connect the first plate 201A and the second plate 201B. The lifting jig 200 may include one rod or two or more rods. The driving part 203 may be configured to control the length of the rod 202. The driving part 203 may include a motor or the like. When the lifting jig 200 is loaded on the battery cell assembly CA, the driving part 203 may control the length of the rod 202 to pull the second plate 201B in a direction approaching the first plate 201A. The side beams SB bolted to the second plate 201B may apply a compressive force F1 in the X direction to the battery cells CL.

Some battery cells CL of the battery cell assembly CA may be swollen. An expansion force may act on the battery cell assembly CA by the swollen battery cells CL. When lifting the battery cell assembly CA in the Z direction, the alignment of the battery cell assembly CA may be distorted by the expansion force. The compressive force F1 in the X direction acting on the battery cells CL can prevent the problem of misalignment of the battery cell assembly CA. In addition, sagging of the lower end part of the battery cell assembly CA and cracking can be prevented.

### (Third embodiment)

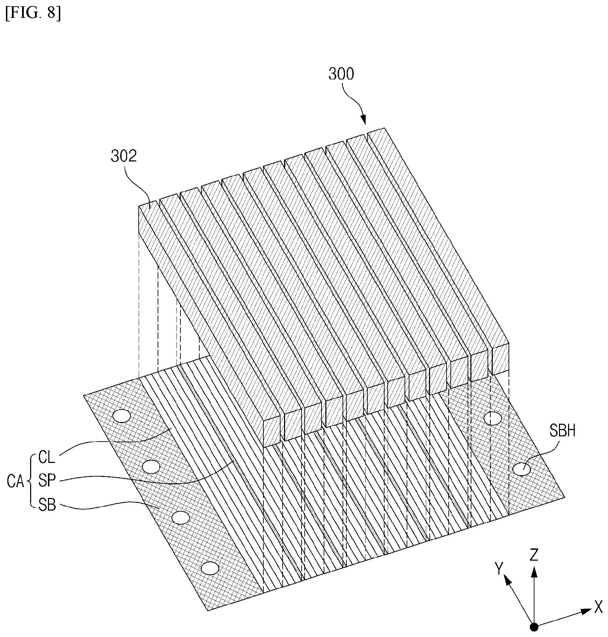

FIG. 8 is a perspective view showing a lifting jig 300 according to exemplary embodiments. In FIG. 8, the same reference numerals as those in FIGS. 1 to 6 can be applied to the description above in the first embodiment, and the same description will be omitted. Hereinafter, the configuration of the third embodiment, which is different from the first embodiment, will be mainly described.

In FIG. 8, the lifting jig 300 differs from the lifting jig 100 of FIGS. 1 to 6 in the shape and number of fixing pads 302. In FIG. 8, the plate of the lifting jig 300 is omitted and only the fixing pads 302 are shown. Each of the fixing pads 302 may be arranged to overlap in the X direction. Each of the fixing pads 302 may overlap in the Z direction with a plurality of battery cells CL. As shown in FIG. 8, each of the fixing pads 302 may overlap in the Z direction with three battery cells CL. However, the shape and number of the fixing pads 302 are not limited thereto, and may be variously modified according to the type of battery cells. According to exemplary embodiments, each of the fixing pads may overlap in the Z direction with all of the battery cells CL between adjacent separators SP.

### (Fourth embodiment)

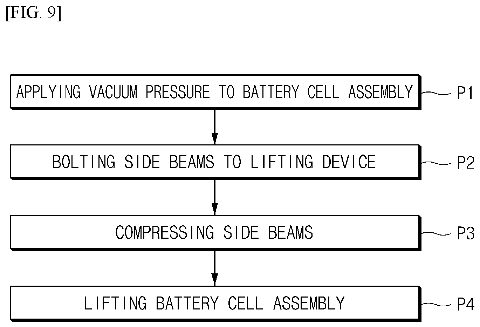

FIG. 9 is a flowchart for explaining a method for lifting a battery cell assembly according to exemplary embodiments.

Referring to FIGS. 1 to 6 and FIG. 9, in P1, vacuum pressure may be applied to the battery cell assembly CA. The vacuum pressure may be applied by the fixing pads 102A, 102B, 102C of the lifting jig 100. Each of the fixing pads 102A, 102B, 102C may apply different vacuum pressures to each of the battery cells CL. The battery cell assembly CA can be fixed to the lifting jig 100 by the vacuum pressure applied by the fixing pads 102A, 102B, 102C.

In P2, the side beams SB of the battery cell assembly CA may be bolted to the lifting jig 100. Bolting the side beams SB to the lifting jig 100 may include aligning the holes SBH of the side beams SB with the holes 104 of the plate 101, and coupling bolts 105 to the holes SBH and 104. The order of P1 and P2 is not limited to that shown in FIG. 9. P2 may be performed prior to P1.

Referring to FIGS. 7 and 9, in P3, a compressive force F1 may be applied to the battery cell assembly CA by pressing the side beams SB. Using the compression part of the lifting jig 200, a compressive force F1 may be applied to the side beams SB of the battery cell assembly CA to bring the side beams closer to each other in the X direction.

In P4, the battery cell assembly CA may be lifted. The battery cell assembly CA may be separated from the base 114 of the battery pack housing and removed from the battery pack housing.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present application.

## Claims

1. A lifting jig comprising:
a plate; and
a plurality of fixing pads coupled to the plate, wherein
the plate comprises holes for coupling to side beams of a battery cell assembly, and
the battery cell assembly comprises the side beams and a plurality of battery cells interposed between the side beams.

2. The lifting jig of claim 1, wherein
at least two or more of the plurality of fixing pads are configured to apply different pressures to the battery cell assembly.

3. The lifting jig of claim 1, wherein
a pressure applied to the battery cell assembly by the plurality of fixing pads increases toward a center of the plurality of fixing pads based on a direction in which the plurality of fixing pads is stacked.

4. The lifting jig of claim 1, further comprising:
a pressure control part connected to each of the plurality of fixing pads and configured to control a pressure applied to the battery cell assembly by each of the plurality of fixing pads.

5. The lifting jig of claim 1, wherein
the side beams comprise holes, and the lifting jig further comprises
bolts passing through the holes of the plate and holes of the side beams.

6. The lifting jig of claim 1, wherein
the plate comprises a first plate coupled to the plurality of fixing pads, and a second plate spaced apart from the first plate and bolted to the side beams, and the lifting jig further comprises
a rod connecting the first plate and the second plate, and a driving part for adjusting a distance between the first plate and the second plate by controlling a length of the rod.

7. The lifting jig of claim 1, wherein
the plurality of fixing pads comprise first fixing pads arranged to overlap each other in a first direction, and second fixing pads arranged to overlap each other in the first direction, wherein
each of the first fixing pads is spaced apart from each of the second fixing pads in a second direction different from the first direction.

8. The lifting jig of claim 7, wherein
each of the battery cells overlaps in a vertical direction with a corresponding one of the first fixing pads and a corresponding one of the second fixing pads.

9. The lifting jig of claim 1, wherein
each of the plurality of fixing pads is arranged to overlap in a horizontal direction and overlaps in a vertical direction with two or more of the plurality of battery cells.

10. The lifting jig of claim 1, wherein
a length of each of the fixing pads is equal to or less than a length of each of the battery cells.

11. The lifting jig of claim 1, wherein
a width of each of the fixing pads is equal to or greater than a width of each of the battery cells.

12. A battery cell assembly lifting method comprising:
applying different vacuum pressures in a vertical direction to a plurality of battery cells of a battery cell assembly.

13. The battery cell assembly lifting method of claim 12, further comprising:
applying a compressive force to the battery cell assembly based on a stacking direction of the plurality of battery cells.

14. The battery cell assembly lifting method of claim 12, further comprising:
separating the battery cell assembly from a base of a battery pack housing.

15. A battery cell assembly lifting method comprising:
fixing a plurality of battery cells of a battery cell assembly to a plurality of fixing pads of a lifting jig; and
bolting side beams of the battery cell assembly to the lifting jig.
